# EUROPÄISCHE PATENTSCHRIFT

(11) **EP 0 870 657 B1**
(45) Veröffentlichungstag und Bekanntmachung des Hinweises auf die Patenterteilung: **17.12.2003**
(21) Anmeldenummer: 98103649.4
(22) Anmeldetag: 28.02.1998
(51) Int. Cl.: B60S 1/48

(54) **Vorrichtung zum Erwärmen von Waschflüssigkeit einer Scheibenwaschanlage**
Apparatus for warming a washer liquid for a windscreen washing device
Dispositif pour le réchauffage du liquide d'un lave-glace

(30) Priorität: 12.04.1997 DE 19715359
(43) Veröffentlichungstag der Anmeldung: 14.10.1998
(73) Patentinhaber: Siemens Aktiengesellschaft, 80333 München (DE)
(72) Erfinder: Petzold, Sven, 65191 Wiesbaden (DE)

(56) Entgegenhaltungen:
- EP-A- 0 456 934
- EP-A- 0 493 334
- EP-A- 0 745 523
- WO-A-97/46431
- DE-A- 2 201 681
- DE-A- 4 431 629
- DE-U- 8 704 903

## Beschreibung

Die Erfindung betrifft eine Vorrichtung zum Erwärmen von Waschflüssigkeit einer Waschanlage, insbesondere einer Scheibenwaschanlage, eines Kraftfahrzeuges mit einer Heizeinrichtung, bei der die Heizeinrichtung zum Erwärmen einer in einem Zwischenspeicher befindlichen, für eine geringe Anzahl von Reinigungsvorgängen einer Scheibe vorgesehenen Menge an Waschflüssigkeit ausgebildet ist.

Solche Vorrichtungen werden in heutigen Kraftfahrzeugen häufig eingesetzt und sind damit bekannt. Die Vorrichtung dient zum Aufheizen der Waschflüssigkeit. Dies ist erforderlich, da bei niedrigen Umgebungstemperaturen die Waschflüssigkeit der Scheibenwaschanlage auch bei Vorhandensein von Frostschutzmittel in der Waschflüssigkeit zum Einfrieren neigt. Bei einer aus der Praxis bekannten Vorrichtung ist die Heizeinrichtung als Gegenstromwärmetauscher ausgebildet und in einer von einem Vorratsbehälter zu einer Waschdüse führenden Waschflüssigkeitsleitung angeordnet. Der Gegenstromwärmetauscher wird in einem Anschlussgewinde einer Ölablassschraube einer Brennkraftmaschine des Kraftfahrzeuges eingesetzt und von dem Motoröl der Brennkraftmaschine beheizt. Die Vorrichtung arbeitet damit ähnlich wie ein Durchlauferhitzer und benötigt große Wärmeübertragungsflächen zur schnellen Übertragung der Wärme.

Nachteilig bei der bekannten Vorrichtung ist, dass der Wärmetauscher trotz großer Wärmeübertragungsflächen sehr träge ist. Dies führt bei besonders niedrigen Außentemperaturen dazu, dass erst nach längerer Betriebszeit der Brennkraftmaschine eine für einen Reinigungsvorgang der Scheibe ausreichende Menge an Waschflüssigkeit zur Verfügung steht. Zur Erlangung einer möglichst geringen Temperaturdifferenz zwischen dem Motoröl und der Waschflüssigkeit ist es zudem erforderlich, die Wärmeübertragungsflächen besonders groß zu gestalten. Hierdurch gestaltet sich die Vorrichtung jedoch sehr aufwendig.

In der EP-A-0 456 934 ist eine Vorrichtung zum Erwärmen von Waschflüssigkeit einer Waschanlage, insbesondere einer Scheibenwaschanlage, eines Kraftfahrzeuges mit einer Heizeinrichtung beschrieben. Die Heizeinrichtung dient dabei zum Erwärmen einer in einem Zwischenspeicher befindlichen, für eine geringe Anzahl von Reinigungsvorgängen einer Scheibe vorgesehenen Menge an Waschflüssigkeit.

In der EP-A-0 901 435 wird ein Instandheizelement innerhalb eines Zwischenspeichers beschrieben, welches senkrecht zur Strömungsrichtung der Waschflüssigkeit angeordnet wird. Dieses Heizelement wird bei einem Verfahren zur Erwärmung der Waschflüssigkeit für eine Scheibenwischanlage eingesetzt. Die EP-A 0-901 435 fällt jedoch unter den Art. 54 (3) und (4), ist somit für die Beurteilung der Erfindungshöhe des Patentgegenstands nicht von Bedeutung.

Der Erfindung liegt das Problem zugrunde, eine Vorrichtung der eingangs genannten Art so zu gestalten, dass in möglichst kurzer Zeit eine zum Reinigen der Scheibe vorgesehene Menge an erwärmter Waschflüssigkeit zur Verfügung steht.

Dieses Problem wird erfindungsgemäß durch die Merkmale des Patentanspruchs 1 gelöst.

Durch diese Gestaltung erwärmt die Heizeinrichtung genau die Menge an Waschflüssigkeit, die zum Reinigen der Scheibe vorgesehen ist. Die in dem Zwischenspeicher befindliche Menge an Waschflüssigkeit beginnt sich unmittelbar nach dem Einschalten der Heizeinrichtung zu erwärmen. Hierdurch wird die in der Waschflüssigkeit zugeführte Wärme angesammelt. Die erfindungsgemäße Vorrichtung benötigt daher nur im Vergleich zu der bekannten Vorrichtung relativ kleine, baulich einfache Wärmeübertragungsflächen zum Erwärmen einer für die Reinigung der Scheibe vorgesehenen Menge an Waschflüssigkeit. Es ist wesentlich, dass die Waschanlage in einem Fahrzeug angeordnet ist.

Brennkraftmaschinen heutiger Kraftfahrzeuge weisen in der Regel einen hohen Wirkungsgrad auf. Hierdurch steht erst nach längerer Betriebszeit der Brennkraftmaschine eine zum Erwärmen der Waschflüssigkeit erforderliche Wärmemenge zur Verfügung. Die Waschflüssigkeit wird gemäß einer vorteilhaften Weiterbildung der Erfindung besonders schnell angewärmt, wenn die Heizeinrichtung eine elektrische Heizung aufweist. Da dank der Erfindung nur eine geringe Menge an Waschflüssigkeit erwärmt wird, benötigt die erfindungsgemäße Vorrichtung besonders wenig elektrische Energie. Weiterhin gestaltet sich hierdurch die erfindungsgemäße Vorrichtung konstruktiv besonders einfach, da keine Kupplungsstellen zu einem Wärmeträger der Brennkraftmaschine erforderlich sind.

Die Heizeinrichtung ist gemäß einer anderen vorteilhaften Weiterbildung der Erfindung besonders kostengünstig herstellbar, wenn sie ein elektrisches Widerstandselement hat.

Der Zwischenspeicher ist gemäß einer anderen vorteilhaften Weiterbildung der Erfindung besonders kostengünstig herstellbar, wenn die Waschflüssigkeitsleitung einen aufgewickelten Bereich mit einer zum Speichern der vorgesehenen Menge an Waschflüssigkeit entsprechenden Anzahl von Windungen aufweist.

Die Wärmeübertragung von der Heizeinrichtung auf die Waschflüssigkeitsleitung erfordert gemäß einer anderen vorteilhaften Weiterbildung der Erfindung einen besonders geringen baulichen Aufwand, wenn die Windungen der Waschflüssigkeitsleitung um die Heizeinrichtung herumgeführt sind. Durch diese Gestaltung lässt sich die erfindungsgemäße Vorrichtung zudem aus besonders wenigen Standardbauteilen zusammenstellen.

Bei der bekannten Vorrichtung muss die Waschflüssigkeit auf eine besonders hohe Temperatur erwärmt werden, da sich die Waschflüssigkeit in der Waschflüssigkeitsleitung zwischen der Ölablassöffnung der Brennkraftmaschine bis zu den Waschdüsen stark abkühlt. Die Waschflüssigkeit benötigt gemäß einer anderen vorteilhaften Weiterbildung der Erfindung eine besonders geringe Energiezufuhr, wenn der Zwischenspeicher zur Anordnung in unmittelbarer Nähe der Waschdüsen vorgesehen ist.

Die Montage der erfindungsgemäßen Vorrichtung gestaltet sich besonders einfach, wenn die Heizeinrichtung und/oder der Zwischenspeicher zur Befestigung an einem eine Aufnahme für die Waschdüse aufweisendem Karosserieteil vorgesehen ist. Im einfachsten Fall können die Waschdüse und der Zwischenspeicher eine durch die Aufnahme des Karosserieteils hindurchgeführte Rastverbindung aufweisen. Hierdurch lassen sich der Zwischenspeicher und die Waschdüse gleichzeitig in einem einzigen Arbeitsgang montieren.

Ein Auslaufen der Waschflüssigkeit aus dem Zwischenspeicher lässt sich gemäß einer anderen vorteilhaften Weiterbildung der Erfindung einfach vermeiden, wenn in einem Anschluss des Zwischenspeichers für die zu der Waschdüse führenden Waschflüssigkeitsleitung ein oberhalb eines vorgesehenen Druckes öffnendes Ventil angeordnet ist.

Eine zur Reinigung von Frontscheiben heutiger Kraftfahrzeuge vorgesehene Vorrichtung hat häufig zumindest zwei mit Abstand zueinander angeordnete Waschdüsen. Die Waschdüsen benötigen gemäß einer anderen vorteilhaften Weiterbildung der Erfindung nur einen einzigen Zwischenspeicher, wenn die Anschlüsse der zu den Waschdüsen führenden Waschflüssigkeitsleitungen jeweils an einem Ende des Zwischenspeichers angeordnet sind und wenn eine von dem Vorratsbehälter zu dem Zwischenspeicher führende Waschflüssigkeitsleitung in der Mitte des Zwischenspeichers angeschlossen ist. Weiterhin wird durch den Anschluss der von dem Vorratsbehälter zu dem Zwischenspeicher führenden Waschflüssigkeitsleitung in der Mitte des Zwischenspeichers eine Vermischung der kalten, von dem Vorratsbehälter zugeführten Waschflüssigkeit mit der bereits erwärmten Waschflüssigkeit weitgehend vermieden. Hierdurch steht jederzeit ausreichend erwärmte Waschflüssigkeit an den Anschlüssen für die zu den Waschdüsen führenden Waschflüssigkeitsleitungen zur Verfügung.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine schematische Darstellung einer Scheibenwaschanlage mit einer Vorrichtung zum Erwärmen der Waschflüssigkeit,
- Fig. 2: einen Zwischenspeicher mit einer Heizeinrichtung der erfindungsgemäßen Vorrichtung,
- Fig. 3: eine weitere Ausführungsform der erfindungsgemäßen Vorrichtung.

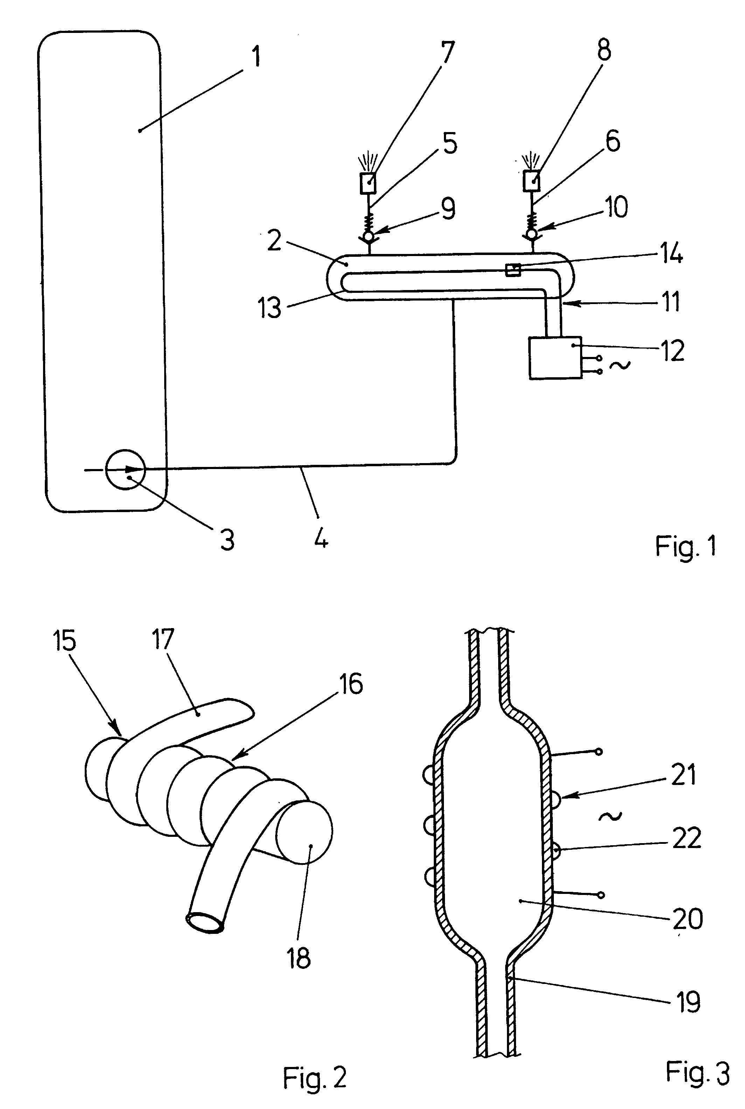

Die Figur 1 zeigt eine Scheibenwaschanlage mit einem Vorratsbehälter 1 für Waschflüssigkeit und mit einem Zwischenspeicher 2. In dem Vorratsbehälter 1 ist eine Waschflüssigkeitspumpe 3 zum Fördern von Waschflüssigkeit über eine Waschflüssigkeitsleitung 4 in den Zwischenspeicher 2 angeordnet. Von dem Zwischenspeicher 2 führen jeweils eine Waschflüssigkeitsleitung 5, 6 zu zwei Waschdüsen 7, 8. In den zu den Waschdüsen 7, 8 führenden Waschflüssigkeitsleitungen 5, 6 sind jeweils ein Ventil 9, 10 angeordnet. Diese Ventile 9, 10 öffnen oberhalb eines vorgesehenen Drucks und unterbinden damit ein Auslaufen der Waschflüssigkeit bei abgeschalteter Waschflüssigkeitspumpe 3. Weiterhin dienen die Ventile 9, 10 als Rückschlagventile und verhindern ein Eindringen von Luft durch die Waschdüsen 7, 8 in den Zwischenspeicher 2. Der Zwischenspeicher 2 hat eine Heizeinrichtung 11 mit einem über eine Steuereinrichtung 12 mit elektrischem Strom versorgten elektrischen Widerstandselement 13.

Durch die Heizeinrichtung 11 wird die in dem Zwischenspeicher 2 befindliche Waschflüssigkeit bei tiefen Außentemperaturen auf eine vorgesehene Temperatur von beispielsweise 45 °C erwärmt. Hierzu hat die Heizeinrichtung 11 ein innerhalb des Zwischenspeichers 2 angeordnetes Thermostat 14. Der Zwischenspeicher 2 ist zum Speichern einer für eine geringe Anzahl von Reinigungsvorgängen einer nicht dargestellten Scheibe vorgesehenen Menge bemessen. Hierdurch benötigt die erfindungsgemäße Vorrichtung besonders wenig elektrische Energie.

Die Figur 2 zeigt einen Zwischenspeicher 15, mit einem aufgewickelten Bereich 16 einer Waschflüssigkeitsleitung 17. Der Zwischenspeicher 15 hat eine zum Speichern der vorgesehenen Menge an Waschflüssigkeit entsprechende Anzahl von Windungen. Stellvertretend für eine Vielzahl von Windungen sind in der Figur 2 nur vier Windungen dargestellt. Die Waschflüssigkeitsleitung 15 ist auf einer stabförmigen Heizeinrichtung 18 aufgewickelt. Die Heizeinrichtung 18 kann beispielsweise eine nicht dargestellte elektrische Heizung aufweisen. Diese Gestaltung des Zwischenspeichers 15 verhindert ein Vermischen von bereits angewärmter und nachströmender kalter Waschflüssigkeit.

Die Figur 3 zeigt einen einteilig mit einer Waschflüssigkeitsleitung 19 gefertigten Zwischenspeicher 20. Bei einer aus einem thermisch verformbaren Kunststoff gefertigten Waschflüssigkeitsleitung 19 kann der Zwischenspeicher 20 beispielsweise im Blasverfahren gefertigt sein. Auf der Außenseite des Zwischenspeichers 20 ist eine Heizeinrichtung 21 mit einem elektrischen Widerstandselement 22 angeordnet.

## Patentansprüche

1. Vorrichtung zum Erwärmen von Waschflüssigkeit einer Waschanlage, insbesondere einer Scheibenwaschanlage, eines Kraftfahrzeuges mit einer Heizeinrichtung, bei der die Heizeinrichtung (18, 21,) zum Erwärmen einer in einem Zwischenspeicher (15, 20) befindlichen, für eine geringe Anzahl von Reinigungsvorgängen einer Scheibe vorgesehenen Menge an Waschflüssigkeit ausgebildet ist, **dadurch gekennzeichnet, dass** der Zwischenspeicher (15, 20) von einem Teilstück der Waschflüssigkeitsleitung (17, 19) gebildet ist und die Heizeinrichtung (11, 18, 21) auf der Außenseite des Zwischenspeichers (15, 20) oder innerhalb des Zwischenspeichers (2) mit ihrer gesamten Längsseite senkrecht zur Strömungsrichtung der Waschflüssigkeit angeordnet ist.

2. Vorrichtung nach Anspruch 1, **dadurch gekennzeichnet, dass** die Heizeinrichtung (11, 21) eine elektrische Heizung aufweist.

3. Vorrichtung nach Anspruch 2, **dadurch gekennzeichnet, dass** die Heizeinrichtung (11, 21) ein elektrisches Widerstandselement (13, 22) hat.

4. Vorrichtung nach zumindest einem der vorhergehenden Ansprüche, **dadurch gekennzeichnet, dass** die Waschflüssigkeitsleitung (17) einen aufgewickelten Bereich (16) mit einer zum Speichern der vorgesehenen Menge an Waschflüssigkeit entsprechenden Anzahl von Windungen aufweist.

5. Vorrichtung nach Anspruch 4, **dadurch gekennzeichnet, dass** die Windungen der Waschflüssigkeitsleitung (17) um die Heizeinrichtung (18) herumgeführt sind.

6. Vorrichtung nach zumindest einem der vorhergehenden Ansprüche, **dadurch gekennzeichnet, dass** der Zwischenspeicher (2, 15, 20, 27) zur Anordnung in unmittelbarer Nähe der Waschdüsen (7, 8, 25) vorgesehen ist.

7. Vorrichtung nach zumindest einem der vorhergehenden Ansprüche, **dadurch gekennzeichnet, dass** die Heizeinrichtung (11, 18, 21) und/oder der Zwischenspeicher (2, 15, 20, 27) zur Befestigung an einem eine Aufnahme für die Waschdüse (7, 8, 25) aufweisendem Karosserieteil vorgesehen ist.

8. Vorrichtung nach zumindest einem der vorhergehenden Ansprüche, **dadurch gekennzeichnet, dass** in einem Anschluss des Zwischenspeichers (2) für die zu der Waschdüse (7, 8) führenden Waschflüssigkeitsleitung (5, 6) ein oberhalb eines vorgesehenen Druckes öffnendes Ventil (9, 10) angeordnet ist.

9. Vorrichtung mit zumindest zwei mit Abstand zueinander angeordneten Waschdüsen nach zumindest einem der vorhergehenden Ansprüche, **dadurch gekennzeichnet, dass** die Anschlüsse der zu den Waschdüsen (7, 8) führenden Waschflüssigkeitsleitungen (5, 6) jeweils an einem Ende des Zwischenspeichers (2) angeordnet sind und dass eine von dem Vorratsbehälter (1) zu dem Zwischenspeicher (2) führende Waschflüssigkeitsleitung (4) in der Mitte des Zwischenspeichers (2) angeschlossen ist.

## Claims

1. Device for the heating of washing liquid of a washing system, in particular a screen washing system, of a motor vehicle, with a heating means, in which the heating means (18, 21) is designed for heating a quantity of washing liquid located in an intermediate store (15, 20) and provided for a small number of operations for cleaning a screen, **characterized in that** the intermediate store (15, 20) is formed by a portion of the washing-liquid line (17, 19), and the heating means (11, 18, 21) is arranged, with its entire longitudinal side perpendicular to the direction of flow of the washing liquid, on the outside of the intermediate store (15, 20) or within the intermediate store (2).

2. Device according to Claim 1, **characterized in that** the heating means (11, 21) has electrical heating.

3. Device according to Claim 2, **characterized in that** the heating means (11, 21) has an electrical resistance element (13, 22).

4. Device according to at least one of the preceding claims, **characterized in that** the washing-liquid line (17) has a wound region (16) with a number of turns corresponding to the desired quantity of washing liquid to be stored.

5. Device according to Claim 4, **characterized in that** the turns of the washing-liquid line (17) are led around the heating means (18).

6. Device according to at least one of the preceding claims, **characterized in that** the intermediate store (2, 15, 20, 27) is provided for arrangement in to the immediate vicinity of the washing nozzles (7, 8, 25).

7. Device according to at least one of the preceding claims, **characterized in that** the heating means (11, 18, 21) and/or the intermediate store (2, 15, 20, 27) are/is provided for fastening to a body part having a receptacle for the washing nozzle (7, 8, 25).

8. Device according to least one of the preceding claims, **characterized in that** a valve (9, 10) opening above an intended pressure is arranged in a connection of the intermediate store (2) for the washing-liquid line (5, 6) leading to the washing nozzle (7, 8).

9. Device, with at least two washing nozzles arranged at a distance from one another, according to at least one of the preceding claims, **characterized in that** the connections of the washing-liquid lines (5, 6) leading to the washing nozzles (7, 8) are arranged in each case at one end of the intermediate store (2), and **in that** a washing-liquid line (4) leading from the reservoir (1) to the intermediate store (2) is connected in the middle of the intermediate store (2).

## Revendications

1. Dispositif de réchauffage du liquide de lavage d'un système de lavage, plus spécifiquement d'un système lave-glace d'un véhicule équipé d'un système de réchauffage dans lequel ledit dispositif de réchauffage (18, 21) est conçu pour réchauffer une quantité de liquide de lavage prévue pour un petit nombre de cycles de lavage d'une vitre se trouvant dans un réservoir intermédiaire (15, 20), **caractérisé en ce que** le réservoir intermédiaire (15, 20) est constitué par une partie de la conduite pour la liquide de lavage (17, 19) et le dispositif de réchauffage (11, 18, 21) est placé sur la face externe du réservoir intermédiaire (15, 20) ou à l'intérieur du réservoir intermédiaire (2) avec son grand côté placé verticalement par rapport au sens d'écoulement du liquide de lavage.

2. Dispositif selon la revendication 1, **caractérisé en ce que** le système de réchauffage (11, 21) est un chauffage électrique.

3. Dispositif selon la revendication 2, **caractérisé en ce que** le système de réchauffage (11, 21) comporte une résistance électrique (13, 22).

4. Dispositif selon au moins une des revendications précédentes, **caractérisé en ce que** la conduite de liquide de lavage (17) comporte une partie (16) enroulée en spirale dont le nombre de spires correspond à la quantité de liquide de lavage devant être accumulée.

5. Dispositif selon la revendication 4, **caractérisé en ce que** les spires de la conduite de liquide de lavage (17) s'enroulent autour du système de réchauffage (18).

6. Dispositif selon au moins une des revendications précédentes, **caractérisé en ce que** le réservoir intermédiaire (2, 15, 20, 27) est prévu pour être placé à proximité immédiate des gicleurs (7, 8, 25).

7. Dispositif selon au moins une des revendications précédentes, **caractérisé en ce que** le système de réchauffage (11, 18, 21) et/ou le réservoir intermédiaire (2, 15, 20, 27) est prévu pour être fixé sur une partie de la carrosserie formant un logement pour le gicleur (7, 8, 25).

8. Dispositif selon au moins une des revendications précédentes, **caractérisé en ce qu'**une valve (9, 10) s'ouvrant au-dessus d'une pression prévue est placée dans un raccordement du réservoir intermédiaire (2) servant à raccorder la conduite de liquide de lavage (5, 6) aboutissant au gicleur (7, 8).

9. Dispositif avec au moins deux gicleurs espacés l'un de l'autre, selon au moins une des revendications précédentes, **caractérisé en ce que** les raccordements des conduites de liquide de lavage (5, 6) aboutissant aux gicleurs (7, 8) sont chacune situés à une extrémité du réservoir intermédiaire (2) et **en ce que** l'une des conduites de liquide de lavage (4) reliant le réservoir (1) au réservoir intermédiaire (2) est raccordée au milieu du réservoir intermédiaire (2).
